# EUROPEAN PATENT SPECIFICATION

(11) **EP 1 549 524 B1**
(45) Date of publication and mention of the grant of the patent: **20.06.2007**
(21) Application number: 03798619.7
(22) Date of filing: 12.09.2003
(51) Int. Cl.: B60K 28/16, B60G 17/015

(54) **METHOD AND ARRANGEMENT FOR ADAPTING DRIVE FORCE**
VERFAHREN UND ANORDNUNG ZUR ANPASSUNG VON ANTRIEBSKRAFT
PROCEDE ET SYSTEME POUR ADAPTER LA PUISSANCE D'ENTRAINEMENT

(30) Priority: 27.09.2002 SE 0202852
(43) Date of publication of application: 06.07.2005
(73) Proprietor: Scania CV AB, 151 87 Södertälje (SE)
(72) Inventor: FURUCRONA, Mats, S-647 31 Mariefred (SE)
(86) International application number: PCT/SE2003/001424
(87) International publication number: WO 2004/028846

(56) References cited:
- EP-A2- 0 417 792
- US-A- 4 805 102
- US-A- 5 044 660
- US-A- 5 517 414

## Description

### TECHNICAL FIELD OF THE INVENTION

The invention relates to a method and a device for motor vehicle drive power adaptation.

### BACKGROUND AND STATE OF THE ART

There are various ways for a motor vehicle driver, particularly in the case of heavy motor vehicles such as trucks, to address difficult situations such as steep upgrades and running surfaces with poor grip. Vehicles may for example be equipped with systems for drive power control ("Traction Control") and/or systems for load transfer (known as "Electronic Level Control" in the case of vehicles with air suspension).

The vehicle normally has a driving axle with two powered wheels. The system for drive power control detects whether either or both of the powered wheels are slipping. If either of the powered wheels is slipping, the drive power control system increases the brake pressure on the slipping wheel, thereby transferring braking power to the other wheel, which is gripping. If both powered wheels are slipping, the engine power applied is reduced, which may enable the powered wheels to grip.

The vehicle normally has not only a driving axle but also a loadbearing auxiliary axle. The system for load transfer usually uses air bellows in a suspension system for the vehicle in order to raise and lower the loadbearing auxiliary axle, thereby regulating the pressure on the driving axle. If both of the powered wheels are slipping, the driver can thus raise the loadbearing auxiliary axle to increase the pressure on the driving axle, thereby enabling the powered wheels to gain a grip.

The various types of systems described above which exist in the state of the art may nevertheless give rise to certain problems. When the drive power control system reduces the engine power applied so that both of the powered wheels slip, this may lead to the power from the engine being insufficient to move the vehicle away from the running surface which is for any reason troublesome, thereby still further increasing the risk of the vehicle becoming immobilised. The load transfer system entails the risk that the driveline, i.e. the engine, gearbox, universal shaft and rear axle, may be overloaded, with consequent damage. As the known load transfer systems are controlled entirely manually, the driver has to decide how much load can be imposed upon the driving axle without causing damage, a decision which he/she is usually ill-equipped to take.

### SUMMARY OF THE INVENTION

The object of the present invention is to provide motor vehicle drive power adaptation which remedies the problems mentioned above.

This is achieved by a method for motor vehicle drive power adaptation in the case of a vehicle which comprises at least one driving axle with two powered wheels, a system for drive power control and a system for load transfer, which load transfer system can regulate a pressure on the driving axle, while a system for supervising the drive power control and load transfer systems, when the drive power control system indicates that both of the powered wheels are slipping, automatically orders the load transfer system to increase the pressure on the driving axle until the drive power control system no longer indicates that both of the powered wheels are slipping.

The fact that the system for supervising the other two systems links the latter together results automatically in correct pressure on the driving axle, enabling the vehicle to gain grip without the engine power applied being reduced and without the driver having had to put at risk the strength of the driveline.

Preferably, the load transfer system can only increase the pressure on the driving axle automatically up to a maximum pressure, although a driver of the vehicle may manually allow the load transfer system to exceed the maximum pressure.

This means that the driver can always be certain that the driving axle pressure will not become excessive, but there still remains, in particularly difficult situations such as an emergency, a possibility of providing the vehicle with grip by means of extra-high driving axle pressure.

The pressure on the driving axle is advantageously increased by reducing the proportion of the load which is supported by a loadbearing auxiliary axle, which is an easy way of increasing the driving axle pressure, particularly in the case of vehicles equipped with an air suspension system which can be used to raise or lower, for example, the loadbearing auxiliary axle.

The invention also relates to a device according to claim 4, with preferred embodiments according to claims 5-6, for implementing the aforesaid method.

### DESCRIPTION OF THE DRAWING

The invention will now be described with reference to the attached drawing, in which:

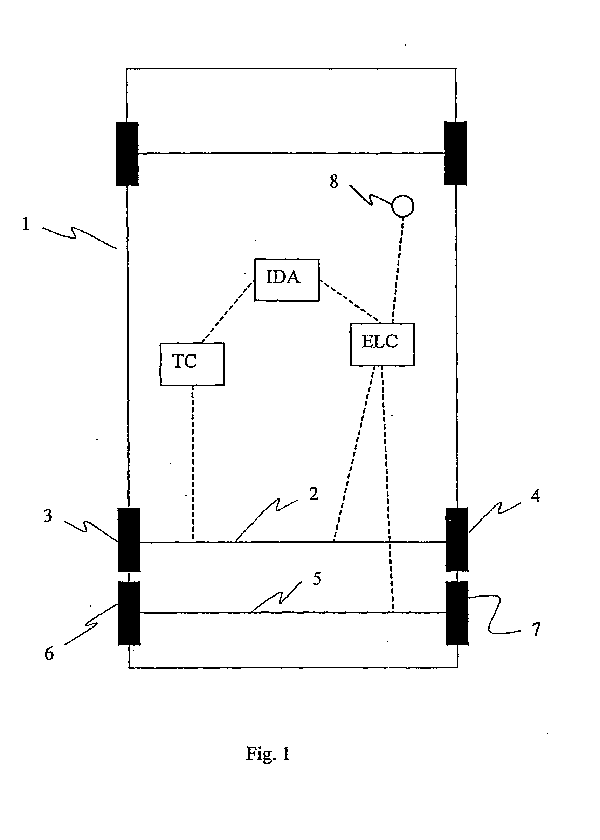

Fig. 1 depicts schematically a motor vehicle as seen from above, comprising a device according to the invention.

### DESCRIPTION OF EMBODIMENTS

Fig. 1 depicts a motor vehicle 1, in this case a truck, with a bogie, with a driving axle 2 with two powered wheels 3, 4 and a loadbearing auxiliary axle 5 with two supporting wheels 6, 7. The vehicle 1 also comprises a drive power control system TC and a load transfer system ELC. The vehicle also comprises a supervisory system IDA for the two aforesaid systems TC, ELC. The broken lines represent communication paths between systems, and between systems and the vehicle. Communication may for example be via the can-bus in the vehicle.

The drive power control system TC (Traction Control) monitors whether either or both of the powered wheels 3, 4 are slipping, in order to make it easier for the driver to deal with difficult situations, such as steep upgrade or running surface with poor grip. If either of the powered wheels 3, 4 is slipping, the TC system increases the brake pressure on the slipping wheel, thereby transferring the braking power via the differential to the other wheel. When neither of the powered wheels is slipping any longer, the braking power is reduced again on the previously slipping powered wheel.

The load control system ELC (Electronic Level Control) uses a suspension system with air bellows in the vehicle to keep the vehicle at a desired level above the ground. When load transfer occurs, the ELC system is used to make it easier for a driver to deal with difficult situations, such as steep upgrade or running surface with poor grip, by allowing the ELC system to increase the driving axle pressure. This is accomplished by the loadbearing auxiliary axle 5 being raised, thus reducing the proportion of load supported by the loadbearing auxiliary axle 5 and increasing the proportion of load supported by the driving axle 2, and hence the pressure on the driving axle 2. The factors which control the available drive power allowed by the running surface are the normal force and the running surface friction on the powered wheels 3, 4. The normal force increases when the driving axle pressure increases, thereby increasing the available drive power. However, there are certain limitations, both legal and technical, on the extent to which the driving axle pressure can be increased. The loads on the driveline, which comprises the engine, gearbox, universal shaft and drive shaft, may become extremely large, with consequent risk of damage.

The IDA (Intelligent Drivepower Adaptation) system for supervising the two systems TC, ELC described above receives information from the drive power control system TC. If the information indicates that both of the powered wheels 3, 4 are slipping, the IDA system automatically orders the load transfer system ELC to increase the driving axle pressure, and hence the available drive power, until the drive power control system TC no longer indicates that both of the powered wheels are slipping. The IDA system for supervising the other two systems TC, ELC thus links together these two other systems TC, ELC. The increase in the driving axle pressure was previously controlled manually by the driver, who had difficulty in deciding how much load could be imposed on the driving axle without damaging the driveline. In the present invention, this is done automatically as necessary and the pressure is increased until the available drive power is sufficient to cause the vehicle to move on. The increase in the drive pressure is discontinued, however, when the pressure reaches a maximum permissible level. It is nevertheless possible for the driver, in particularly difficult situations such as emergencies, to use some kind of means 8, such as a control on the instrument panel, to remove a barrier and enable the load transfer system to increase the driving axle pressure further. It has then to be made clear to the driver, e.g. by some form of acoustic or light signal, that there is great risk of overloading the driveline and causing consequent damage.

The foregoing should not be regarded as limiting the invention but only as a possible embodiment of it. For example, the invention may be applicable to vehicles other than trucks, e.g. buses or passenger cars equipped with systems for drive power control and load transfer, and the load transfer system may use means other than the air suspension system. Nor need the drive power control system send information continuously to the supervisory system, as it may for example be sufficient that the drive power control system informs the supervisory system that both of the powered wheels are slipping. The systems, which comprise electrical control systems and computer units, may each be situated separately, as illustrated in Fig. 1, or they may be built together with one another. Many other alternative solutions also fall within the scope of what is indicated in the ensuing claims.

## Claims

1. A method for motor vehicle drive power adaptation in the case of a vehicle (1) which comprises at least one driving axle (2) with two powered wheels (3, 4), a system for drive power control (TC) and a system for load transfer (ELC), which load transfer (ELC) system can regulate a pressure on the driving axle (2), **characterised in that** a system for supervision (IDA) of the drive power control (TC) and load transfer (ELC) systems, when the drive power control (TC) system indicates that both of the powered wheels (3, 4) are slipping, automatically orders the load transfer (ELC) system to increase the pressure on the driving axle (2) until the drive power control (TC) system no longer indicates that both of the powered wheels (3, 4) are slipping.

2. A method for drive power adaptation according to claim 1, **characterised in that** the load transfer (ELC) system can only increase the pressure on the driving shaft (2) automatically up to a maximum pressure, and that a driver of the vehicle (1) can manually enable the load transfer (ELC) system to exceed the maximum pressure.

3. A method for drive power adaptation according to claim 1 or 2, **characterised in that** the pressure on the driving axle (2) is increased by the proportion of load supported by the loadbearing auxiliary axle (5) being reduced by the auxiliary axle (5) being shifted upwards closer to the chassis of the vehicle (1).

4. A device for motor vehicle drive power adaptation in the case of a vehicle (1) which comprises at least one driving axle (2) with two powered wheels (3, 4), a system for drive power control (TC) and a system for load transfer (ELC), which load transfer (ELC) system is arranged to be able to regulate a pressure on the driving axle (2), **characterised in that** the device for drive power adaptation is arranged to supervise the drive power control (TC) and load transfer (ELC) systems and that when the drive power control (TC) system indicates that both of the powered wheels (3, 4) are slipping, it automatically orders the load transfer (ELC) system to increase the pressure on the driving axle (2) until the drive power control (TC) system no longer indicates that both of the powered wheels (3, 4) are slipping.

5. A device for drive power adaptation according to claim 4, **characterised in that** the load transfer (ELC) system is arranged to be able only to increase the pressure on the driving axle (2) automatically up to a maximum pressure, and that a means (8) is arranged to allow a driver of the vehicle (1) to manually enable the load transfer (ELC) system to exceed the maximum pressure.

6. A device for drive power adaptation according to claim 4 or 5, **characterised in that** the load transfer system is arranged to increase the pressure on the driving axle (2) by reducing the proportion of load which is supported by the loadbearing auxiliary axle (5).

## Patentansprüche

1. Verfahren zur Anpassung der Antriebsleistung eines motorisierten Fahrzeugs im Falle eines Fahrzeugs (1), das wenigstens eine Antriebsachse (2) mit zwei angetriebenen Rädern (3, 4), ein System für eine Antriebsleistungssteuerung (TC) und ein System für einen Lastwechsel (ELC) umfasst, wobei das System zum Lastwechsel (ELC) einen Druck auf die Antriebsachse (2) regeln kann,
**dadurch gekennzeichnet, dass** ein System zum Überwachen (IDA) der Systeme zur Antriebsleistungssteuerung (TC) und zum Lastwechsel (ELC) dann, wenn das System zur Antriebsleitungssteuerung (TC) anzeigt, dass beide angetriebenen Räder (3, 4) schlüpfen, automatisch das System zum Lastwechsel (ELC) anweist, um den Druck auf die Antriebsachse (2) zu erhöhen, bis das System zur Antriebsleistungssteuerung (TC) nicht länger anzeigt, dass beide der angetriebenen Räder (3, 4) schlüpfen.

2. Verfahren zur Antriebsleistungsanpassung nach Anspruch 1,
**dadurch gekennzeichnet, dass** das System zum Lastwechsel (ELC) den Druck auf der Antriebsache (2) automatisch lediglich bis zu einem Maximaldruck anheben kann und dass ein Fahrer des Fahrzeugs (1) manuell das System zum Lastwechsel (ELC) dazu veranlassen kann, den Maximaldruck zu übersteigen.

3. Verfahren zur Antriebsleistungsanpassung nach Anspruch 1 oder 2,
**dadurch gekennzeichnet, dass** der Druck auf die Antriebsachse (2) um den Lastanteil erhöht wird, der von einer lasttragenden Hilfsachse (5) getragen wird, der **dadurch** reduziert wird, dass die Hilfsachse (5) nach oben näher an das Chassis des Fahrzeugs (1) hin verlagert wird.

4. Vorrichtung zur Antriebsleistungsanpassung eines motorisierten Fahrzeugs im Falle eines Fahrzeugs (1), das wenigstens eine Antriebsachse (2) mit zwei angetriebenen Rädern (3, 4), ein System zur Antriebsleistungssteuerung (TC) und ein System für einen Lastwechsel (ELC) aufweist, wobei das System zum Lastwechsel (ELC) dazu ausgebildet ist, um dazu in der Lage zu sein, einen Druck auf die Antriebsachse (2) zu regeln,
**dadurch gekennzeichnet, dass** die Vorrichtung für die Anpassung der Antriebsleistung dazu ausgebildet ist, die Systeme zur Antriebleistungssteuerung (TC) und zum Lastwechsel (ELC) zu überwachen, und dass dann, wenn das System zur Antriebsleistungssteuerung (TC) anzeigt, dass beide der angetriebenen Räder (3, 4) schlüpfen, es automatisch das System zum Lastwechsel (ELC) anweist, den Druck auf der Antriebsachse (2) zu erhöhen, bis das System zur Antriebsleistungssteuerung (TC) nicht länger anzeigt, dass beide der angetriebenen Räder (3, 4) schlüpfen.

5. Vorrichtung zur Antriebsleistungsanpassung nach Anspruch 4,
**dadurch gekennzeichnet, dass** das System zum Lastwechsel (ELC) dazu ausgebildet ist, dazu in der Lage zu sein, den Druck auf die Antriebsachse (2) automatisch auf einen Maximaldruck anzuheben, und dass ein Mittel (8) dazu angeordnet ist, einem Fahrer des Fahrzeugs (1) zu ermöglichen, manuell das System zum Lastwechsel (ELC) dazu zu befähigen, dass der Maximaldruck überschritten wird.

6. Vorrichtung zur Antriebsleistungsanpassung nach Anspruch 4 oder 5,
**dadurch gekennzeichnet, dass** das System zum Lastwechsel dazu angeordnet ist, den Druck auf die Antriebsachse (2) durch Reduzieren des Lastanteils der von der lasttragenden Hilfsachse (5) getragen wird, anzuheben.

## Revendications

1. Procédé d'adaptation de la puissance d'entraînement d'un véhicule à moteur dans le cas d'un véhicule (1) comprenant au moins un essieu moteur (2) avec deux roues motrices (3, 4), un système de commande de la puissance d'entraînement (TC) et un système de transfert de charge (ELC), lequel système de transfert de charge (ELC) peut réguler une pression sur l'essieu moteur (2), **caractérisé en ce qu'**un système de supervision (IDA) des systèmes de commande de la puissance d'entraînement (TC) et de transfert de charge (ELC), lorsque le système de commande de la puissance d'entraînement (TC) indique que les deux roues motrices (3, 4) patinent, ordonne automatiquement au système de transfert de charge (ELC) d'augmenter la pression sur l'essieu moteur (2) jusqu'à ce que le système de commande de la puissance d'entraînement (TC) n'indique plus que les deux roues motrices (3, 4) patinent.

2. Procédé d'adaptation de la puissance d'entraînement selon la revendication 1, **caractérisé en ce que** le système de transfert de charge (ELC) peut seulement augmenter automatiquement la pression sur l'essieu moteur (2) jusqu'à une pression maximum et **en ce que** le conducteur du véhicule (1) peut actionner manuellement le système de transfert de charge (ELC) pour dépasser la pression maximum.

3. Procédé d'adaptation de la puissance d'entraînement selon la revendication 1 ou 2, **caractérisé en ce que** la pression sur l'essieu moteur (2) est augmentée de la proportion de la charge supportée par l'essieu auxiliaire porteur de charge (5) qui est réduite par le déplacement vers le haut de l'essieu auxiliaire (5) plus près du châssis du véhicule (1).

4. Dispositif d'adaptation de la puissance d'entraînement d'un véhicule à moteur dans le cas d'un véhicule (1) comprenant au moins un essieu moteur (2) avec deux roues motrices (3, 4), un système de commande de la puissance d'entraînement (TC) et un système de transfert de charge (ELC), lequel système de transfert de charge (ELC) est agencé de manière à pouvoir réguler une pression sur l'essieu moteur (2), **caractérisé en ce que** le dispositif d'adaptation de la puissance d'entraînement est agencé pour superviser les systèmes de commande de la puissance d'entraînement (TC) et de transfert de charge (ELC) et **en ce que**, lorsque le système de commande de la puissance d'entraînement (TC) indique que les deux roues motrices (3, 4) patinent, il ordonne automatiquement au système de transfert de charge (ELC) d'augmenter la pression sur l'essieu moteur (2) jusqu'à ce que le système de commande de la puissance d'entraînement (TC) n'indique plus que les deux roues motrices (3, 4) patinent.

5. Dispositif d'adaptation de la puissance d'entraînement selon la revendication 4, **caractérisé en ce que** le système de transfert de charge (ELC) est agencé pour pouvoir seulement augmenter automatiquement la pression sur l'essieu moteur (2) jusqu'à une pression maximum et **en ce qu'**un moyen (8) est agencé pour permettre au conducteur du véhicule (1) d'actionner manuellement le système de transfert de charge (ELC) pour dépasser la pression maximum.

6. Dispositif d'adaptation de la puissance d'entraînement selon la revendication 4 ou 5, **caractérisé en ce que** le système de transfert de charge est agencé pour augmenter la pression sur l'essieu moteur (2) en réduisant la proportion de charge qui est supportée par l'essieu auxiliaire porteur de charge (5).
